(19) Europäisches Patentamt
European Patent Office
Office européen des brevets

(11) **EP 4 312 195 A1**

(12) **EUROPEAN PATENT APPLICATION**

(43) Date of publication:
**31.01.2024 Bulletin 2024/05**

(21) Application number: **23179192.2**

(22) Date of filing: **14.06.2023**

(51) International Patent Classification (IPC):
**G06V 10/62** $^{(2022.01)}$

(52) Cooperative Patent Classification (CPC):
**G06V 10/62**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.07.2022 CN 202210887240**

(71) Applicant: **FUJITSU LIMITED**
**Kawasaki-shi, Kanagawa 211-8588 (JP)**

(72) Inventors:
• **WANG, Ping**
**Chaoyang District, Beijing, 100027 (CN)**
• **WANG, Liuan**
**Chaoyang District, Beijing, 100027 (CN)**
• **SUN, Jun**
**Chaoyang District, Beijing, 100027 (CN)**

(74) Representative: **Hoffmann Eitle**
**Patent- und Rechtsanwälte PartmbB**
**Arabellastraße 30**
**81925 München (DE)**

(54) **METHOD, DEVICE AND STORAGE MEDIUM FOR POST-PROCESSING IN MULTI-TARGET TRACKING**

(57) The present disclosure relates to a method, device and storage medium for post-processing in multi-target tracking. According to an embodiment of the present disclosure, the method comprises making attempts to split a tracklet indicative of a trajectory of a single target by performing operations of determining a re-identification feature set of an image patch sequence by determining a re-identification feature of each image patch in the image patch sequence of the tracklet; determining whether a candidate identification switch image patch is present in the tracklet based on feature similarities of a plurality of re-identification feature pairs in the re-identification feature set; in a case where a determination result is "yes", verifying whether it is credible that identification-switch has occurred at the candidate identification switch image patch; and in a case where a verification result is "credible", splitting the tracklet into two tracklets based on the candidate identification switch image patch.

Figure 1

EP 4 312 195 A1

**Description**

**CROSS-REFERENCE TO RELATED APPLICATIONS**

This application claims the priority benefit of Chinese Patent Application No. 202210887240.2, filed on July 26, 2022 in the China National Intellectual Property Administration, the disclosure of which is incorporated herein in its entirety by reference.

**FIELD OF THE INVENTION**

The present disclosure relates generally to information processing and computer vision, and more particularly, to a method, a device and a storage medium for post-processing in multi-target tracking.

**BACKGROUND OF THE INVENTION**

With the development of computer science and artificial intelligence, it is becoming increasingly universal and effective to use computers to run artificial intelligence models based on neural networks to implement information processing. Computer vision is an important application field of artificial intelligence models.

A branch of computer vision technology is multi-target tracking. Multi-target tracking is commonly referred to as MTT (Multiple Target Tracking; sometimes also abbreviated as MOT: Multiple Object Tracking) briefly, which is used to detect (locate) and endow identifications (IDs) to targets of types of interest such as pedestrians, automobiles or/or animals in a video, so as to perform trajectory tracking, without knowing the number of the targets in advance. A desired tracking result is that: the same target (e.g., a certain person) in multiple frames of images in a video is identified with the same ID, and different targets are identified with different IDs, so as to achieve subsequent work such as trajectory prediction, precise searching and the like. MTT is a key technology in the field of computer vision, and has been widely applied in fields such as autonomous driving, intelligent monitoring, behavior recognition and the like.

In multi-target tracking, for an input video, a tracking result of targets is output. A tracking result can be displayed by imaging. For example, in a tracking result image, each target is indicated by, for example, a rectangular bounding box with a corresponding ID identification number and/or color. In an image sequence of multiple frames of a video, a moving trajectory of a bounding box of the same ID can be regarded as a trajectory of a target of the ID, and each trajectory point on the trajectory corresponds to a corresponding image patch. In these multiple frames, an image patch sequence of multiple image patches indicated by the bounding box of the ID is referred to as a tracklet (tracklet). It is possible to determine time information and location information of each image patch in a tracklet. The time information can be a time when a target is at a location as shown by the image patch, i.e., a photographing time t of an image; and the location information can be a location (referred to as "image coordinate system location") of the image patch in the image at the time t, and/or a location (referred to as "actual coordinate system location") of the target in a real space at the time t.

The adverse factors affecting the accuracy of a result of multi-target tracking include: occlusion, target overlapping, illumination, attitude changes, etc. It is challenging to improve the accuracy of a result of multi-target tracking.

**SUMMARY OF THE INVENTION**

A brief summary of the present disclosure will be given below to provide a basic understanding of some aspects of the present disclosure. It should be understood that the summary is not an exhaustive summary of the present disclosure. It does not intend to define a key or important part of the present disclosure, nor does it intend to limit the scope of the present disclosure. The object of the summary is only to briefly present some concepts, which serves as a preamble of the detailed description that follows.

In order to improve the accuracy of multi-target tracking, it is possible to perform post-processing on a tracking result (e.g., a tracklet indicating a trajectory of a single target) outputted by a multi-target tracking model. A circumstance of reducing the accuracy of multi-target tracking is that: in an image patch sequence SqPatch of a tracklet indicating a trajectory of a single target Tg[x], image patches of different targets actually appear. For example, a target in Patch[i] is Tg[x], while another target in Patch[i+1] is Tg[x']. This is referred to as identification-switch (id-switch). The occurrence of identification-switch means the appearance of an incorrect trajectory. In a tracklet, identification-switch may occur two, three, or even more times. The technical problems to be solved by embodiments of the present disclosure include but are not limited to at least one of: reducing identification-switch, and suppressing the appearance of an incorrect trajectory.

According to an aspect of the present disclosure, there is provided a computer-implemented method for post-processing in multiple-target tracking. The method comprises making attempts to split a tracklet indicative of a trajectory of a single target by performing operations of: determining a re-identification feature set of an image patch sequence by determining a re-identification feature of each image patch in the image patch sequence of the tracklet; determining whether a candidate identification switch image patch is present in the tracklet based on feature similarities of a plurality of re-identification feature pairs in the re-identification feature set; in a case where a determination result is "yes", verifying whether it is credible that identification-switch has occurred at the candidate identification switch image patch; and in a case where a verification result is "credible", splitting the tracklet into two tracklets based on the candidate identification switch image patch

According to an aspect of the present disclosure, there is provided a device for post-processing in multi-target tracking. The device comprises: a memory having instructions stored thereon; and at least one processor connected with the memory and configured to execute the instructions to make attempts to split a tracklet indicative of a trajectory of a single target by performing operations of: determining a re-identification feature set of an image patch sequence by determining a re-identification feature of each image patch in the image patch sequence of the tracklet; determining whether a candidate identification switch image patch is present in the tracklet based on feature similarities of a plurality of re-identification feature pairs in the re-identification feature set; in a case where a determination result is "yes", verifying whether it is credible that identification-switch has occurred at the candidate identification switch image patch; and in a case where a verification result is "credible", splitting the tracklet into two tracklets based on the candidate identification switch image patch.

According to an aspect of the present disclosure, there is provided a non-transitory computer-readable storage medium having a program stored thereon. The program, when executed, causes a computer to make attempts to split a tracklet indicative of a trajectory of a single target by performing operations of: determining a re-identification feature set of an image patch sequence by determining a re-identification feature of each image patch in the image patch sequence of the tracklet; determining whether a candidate identification switch image patch is present in the tracklet based on feature similarities of a plurality of re-identification feature pairs in the re-identification feature set; in a case where a determination result is "yes", verifying whether it is credible that identification-switch has occurred at the candidate identification switch image patch; and in a case where a verification result is "credible", splitting the tracklet into two tracklets based on the candidate identification switch image patch.

The beneficial effects of the methods, devices and storage media of the present disclosure include at least of: reducing identification-switch, and improving the accuracy of multi-target tracking.

## BRIEF DESCRIPTION OF THE DRAWINGS

Embodiments of the present disclosure will be described below with reference to the accompanying drawings, which will help to more easily understand the above and other objects, features and advantages of the present disclosure. The accompanying drawings are merely intended to illustrate the principles of the present disclosure. The sizes and relative positions of units are not necessarily drawn to scale in the accompanying drawings. The same reference numbers may denote the same features. In the accompanying drawings:

Figure 1 illustrates an exemplary flowchart of a method for post-processing in multiple-target tracking according to an embodiment of the present disclosure;

Figure 2 illustrates a schematic diagram of multi-target tracking;

Figure 3 illustrates an exemplary flowchart of a method for determining a candidate identification switch image patch according to an embodiment of the present disclosure;

Figure 4 illustrates an exemplary flowchart of a method for determining a candidate identification switch image patch based on feature similarities of re-identification feature pairs of adjoining image patch pairs according to an embodiment of the present disclosure;

Figure 5 illustrates an exemplary flowchart of a method for determining a candidate identification switch image patch according to an embodiment of the present disclosure;

Figure 6 illustrates an example diagram of a global similarity matrix of three sample tracklets according to the present disclosure;

Figure 7 illustrates an exemplary flowchart of a method for determining a candidate identification switch image patch of a tracklet based on a global similarity matrix according to an embodiment of the present disclosure;

Figure 8 illustrates an example transformation value curve representing changes in a checkerboard kernel transformation value of each image patch according to an embodiment of the present disclosure;

Figure 9 illustrates an exemplary flowchart of a method for verification according to an embodiment of the present disclosure;

Figure 10 is an exemplary block diagram of a device for post-processing in multiple-target tracking according to an embodiment of the present disclosure;

Figure 11 is an exemplary block diagram of a device for post-processing in multiple-target tracking according to an embodiment of the present disclosure; and

Figure 12 is an exemplary block diagram of an information processing apparatus according to an embodiment of the present disclosure.

## DETAILED DESCRIPTION OF THE INVENTION

Hereinafter, exemplary embodiments of the present disclosure will be described combined with the accompanying drawings. For the sake of clarity and conciseness, the specification does not describe all features of actual embodiments. However, it should be understood that many decisions specific to the embodiments may be made in developing any such actual embodiment, so as to achieve specific objects of a developer, and these decisions may vary as embodiments are different.

It should also be noted herein that, to avoid the present disclosure from being obscured due to unnecessary details, only those device structures closely related to the solution according to the present disclosure are shown in the accompanying drawings, while other details not closely related to the present disclosure are omitted.

It should be understood that, the present disclosure will not be limited only to the described embodiments due to the following description with reference to the accompanying drawings. Herein, where feasible, embodiments may be combined with each other, features may be substituted or borrowed between different embodiments, and one or more features may be omitted in one embodiment.

Computer program code for performing operations of various aspects of embodiments of the present disclosure can be written in any combination of one or more programming languages, the programming languages including object-oriented programming languages, such as Java, Smalltalk, C++ and the like, and further including conventional procedural programming languages, such as "C" programming language or similar programming languages.

Methods of the present disclosure can be implemented by circuitry having corresponding functional configurations. The circuitry includes circuitry for a processor.

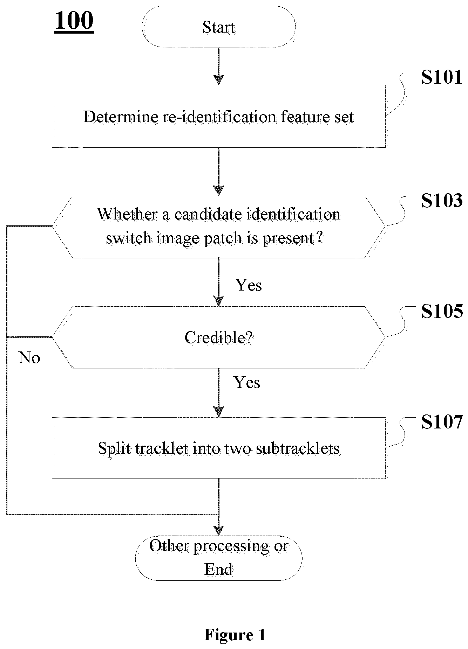

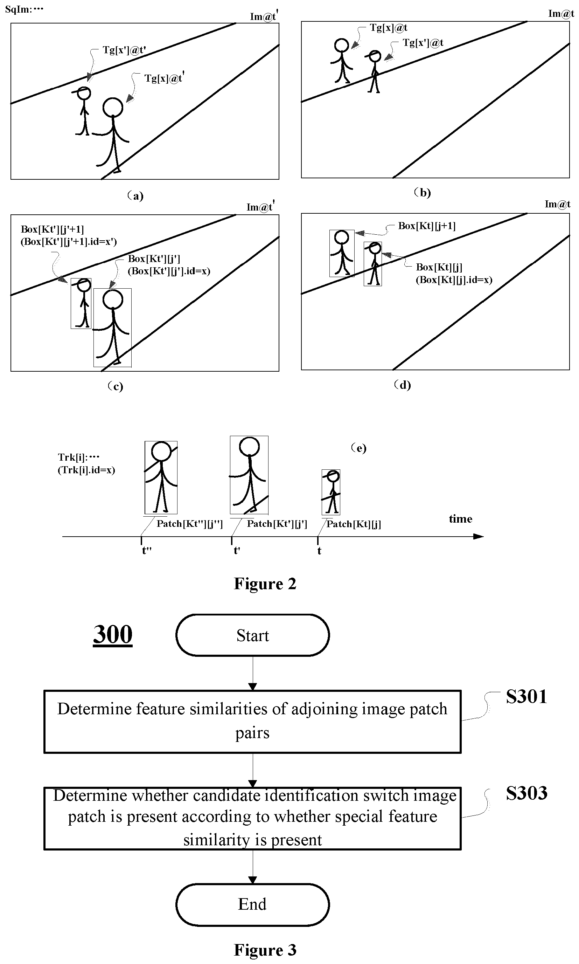

An aspect of the present disclosure relates to a method for post-processing in Multi-Target Tracking (MTT). The method can be implemented with a computer. Exemplary description of a method 100 for post-processing of the present disclosure will be made with reference to Figure 1 and Figure 2 below, wherein, Figure 1 illustrates an exemplary flowchart of a method 100 for post-processing in multiple-target tracking according to an embodiment of the present disclosure; and Figure 2 illustrates a schematic diagram of multi-target tracking. The method 100 comprises making attempts to split a tracklet Trk[i] indicative of a trajectory of a single target Tg[x] by performing operations S101-S107.

In operation S101, a re-identification feature set Fs[i] of an image patch sequence SqPatch[i] is determined by determining a re-identification feature (generally represented as F[j]) of each image patch in the image patch sequence SqPatch[i] of the tracklet Trk[i] indicative of the trajectory of the single target Tg[x], A target identification attribute of the tracklet Trk[i] is rk[i].id=x, that is, the tracklet Trk[i] is a tracklet for the target Tg[x] which is given by multi-target tracking. For a segment of video, if a plurality of targets appear therein, multi-target tracking can give a plurality of tracklets corresponding to a plurality of targets. Referring to Figure 2 (e), the tracklet Trk[i] corresponds to one image patch sequence, image patches Patch[Kt"][j"], Patch[Kt'][j'], Patch[Kt][j] at three exemplary times (a current time t, a previous time t', a more previous time t") are shown in the figure, it is assumed that identification-switch has occurred in the tracklet, wherein, target identifications of image patches at and before the time t' have been correctly assigned, and are all images of the same target Tg[x], while an image patch at the time t has been incorrectly assigned with a target identification "x", which actually corresponds to another target Tg[x']. Figure 2(a) and Figure 2(b) illustrate two schematic images (i.e., two frames of images photographed by a monitoring camera lens) in an input image sequence SqIm in multi-target tracking: an image Im@t' at the previous t', and an image Im@t at the current time t. Figure 2(c) and Figure 2(d) illustrate two schematic images in an output image sequence in multi-target tracking, wherein, bounding boxes that highlight detected targets have been overlaid in input images, two targets of interest have been detected in the image Im@t' at the previous time t', locations of the targets are identified with two rectangular bounding boxes Box[Kt'] [j'], Box[Kt'][j'+1], a target identification has been assigned for each bounding box through target matching, Box[Kt'][j'].id=x, Box[Kt'][j'+1].id=x', and an image area defined by the bounding box Box[Kt'][j'] is the image patch Patch[Kt'][j']; bounding boxes that highlight targets Box[Kt][j], Box [Kt][j+1] have also been overlaid in the image Im@t at the current time t, wherein schematically, it is assumed that the bounding box Box[Kt][j] has been matched with an incorrect target identification (that is, the target is actually Tg[x'], but a target identification attribute of Box[Kt][j] has been incorrectly assigned as "x"), and as shown in Figure 2(e), this would result in occurrence of identification-switch in the tracklet Trk[i] for the target Tg[x], and the image patch Patch[Kt][j] therein actually is not an image patch for the target Tg[x].

Referring to Figure 1, in operation S103, whether a candidate identification switch image patch Patch_sc is present in the tracklet Trk[i] is determined based on feature similarities of a plurality of re-identification feature pairs in the re-identification feature set Fs. The candidate identification switch image patch Patch_sc is an image patch in the image patch sequence of the tracklet Trk[i]. Any re-identification feature in the re-identification feature set Fs is represented as F[j], and a feature similarity of a re-identification feature pair composed of features F[j], F[j'] in Fs is represented as Sim(F[j],F[j']). The similarity can be a cosine similarity.

In a case where a determination result is "yes", operation S105 is performed to verify whether it is credible that identification-switch has occurred at the candidate identification switch image patch Patch_sc.

In a case where a verification result is "credible", operation S107 is performed to split the tracklet into two tracklets based on the candidate identification switch image patch Patch_sc. For example, if the image patch sequence SqPatch[i] of the tracklet Trk[i] is represented as Patch[jStart], ⋯⋯, Patch[j], ⋯⋯, Patch[jEnd], wherein, the candidate identification switch image patch Patch_sc=Patch[js], then Patch[jStart],⋯⋯, Patch [j], ⋯⋯, Patch [j End] is split into: a first tracklet Trk_1: Patch[jStart],⋯⋯, Patch[js]; and a second tracklet Trk_2: Patch[js+1], ⋯⋯, Patch[jEnd]. The "other processing" in Figure 1 includes, for example, recursive processing that will be described later.

Further exemplary description of the details of the method 100 will be made below.

It is possible to determine a candidate identification switch image patch based on similarities of adjoining image patch pairs. A method for determining a candidate identification switch image patch according to an embodiment of the present disclosure will be exemplarily described with reference to Figure 3 below. Figure 3 illustrates an exemplary flowchart of a method 300 for determining a candidate identification switch image patch according to an embodiment of the present disclosure. In an example, the operation S103 in Figure 1 can include operations in the method 300.

In operation S301, feature similarities of re-identification feature pairs of a plurality of adjoining image patch pairs in the image patch sequence SqPatch[i] are determined. For example, SqPatch[i] comprises the image patches Patch[jStart], ⋯⋯ Patch[j], ......, Patch[jEnd], then jmax=jEnd-jStart adjoining image patch pairs can be obtained, and a j-th feature similarity Sim[j] is a similarity Sim(F[j+1], F[j]) between a re-identification feature F[j+1] of an image patch Patch[j+1] and a re-identification feature F[j] of an image patch Patch[j]. The similarity can be a cosine similarity between re-identification features.

In operation S303, it is determined whether a candidate identification switch image patch is present in the tracklet Trk[j] according to whether a special feature similarity Simp less than a predetermined similarity threshold sTh is present in the plurality of feature similarities. In an example, when a special feature similarity Simp is present, it is determined that a candidate identification switch image patch is present in the tracklet Trk[j], and, an image patch associated with the special feature similarity Simp is designated as the candidate identification switch image patch. For example, when the special feature similarity Simp is Sim[j] (i.e., Sim[j]<sTh), the image patch Patch[j] is designated as the candidate identification switch image patch.

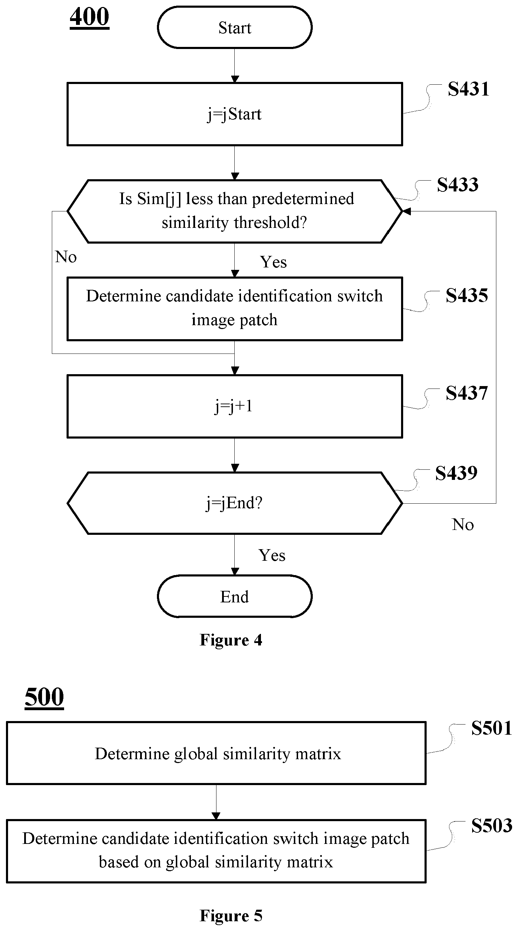

Optionally, it is possible to find at a time all special feature similarities in the plurality of feature similarities, and to designate image patches associated therewith as candidate identification switch image patches. Figure 4 illustrates an exemplary flowchart of a method 400 for determining a candidate identification switch image patch based on feature similarities of re-identification feature pairs of adjoining image patch pairs according to an embodiment of the present disclosure. In an example, the operation S303 in Figure 3 can include operations in the method 400. As illustrated in Figure 4, in operation S431, a loop parameter j is initialized to jStart. In operation S433, it is determined whether Sim[j] is less than sTh. In a case where a determination result is "yes", operation S435 is performed to determine Patch[j] as a candidate identification switch image patch. In operation S437, the loop parameter j is added by 1. In operation S439, it is determined whether the loop parameter j is equal to jEnd, if "yes" then the method ends, and if "no" then turn back to the operation S433.

In an embodiment, it is possible to determine a candidate identification switch image patch based on a global similarity matrix determined from similarities of all image patch pairs in the image patch sequence. Figure 5 illustrates an exemplary flowchart of a method 500 for determining a candidate identification switch image patch according to an embodiment of the present disclosure. Exemplary description of the method 500 for determining the candidate identification switch image patch will be made with reference to Figure 5 below. In an example, the operation S103 in Figure 1 can include operations in the method 500.

In operation S501, a global similarity matrix GS representing similarities between respective image patches in the image patch sequence is generated based on feature similarities of the plurality of re-identification feature pairs in the re-identification feature set Fs. An element s(j,j') in the global similarity matrix GS is a similarity Sim(F[j], F[j']) between the re-identification features F[j], F[j'], where j,j' ∈ [jStart,jEnd].

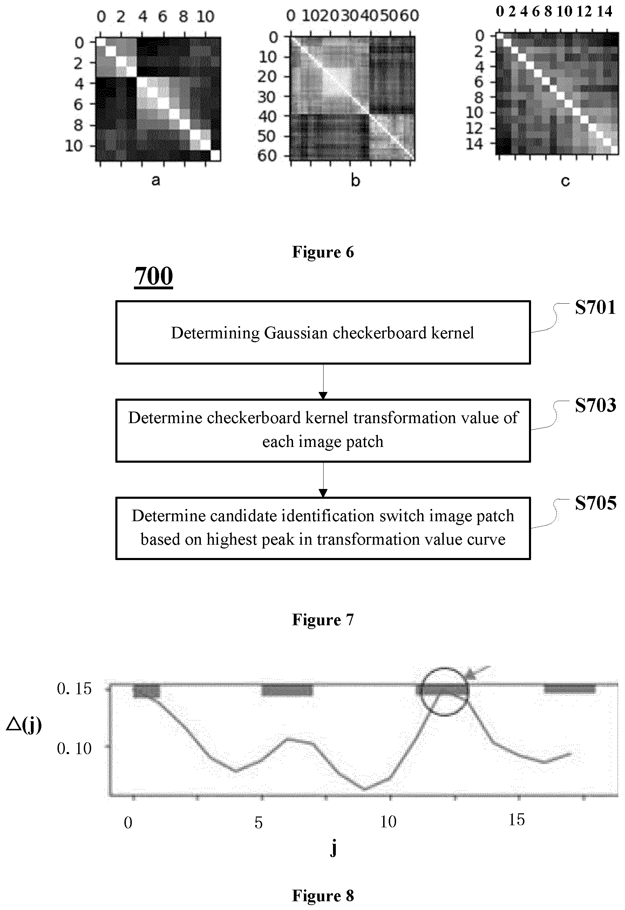

In operation S503, it is determined whether the candidate identification switch image patch is present in the tracklet Trk[i] based on the global similarity matrix GS. Figure 6 illustrates an example diagram of a global similarity matrix of three sample tracklets according to the present disclosure, wherein, depths of colors of color patches are used to represent the magnitude of similarities corresponding to elements at corresponding locations in the matrix GS, white represents a largest similarity, that is, two features are completely the same, and a darker color of a color patch represents a smaller similarity. Identification-switch has occurred in tracklets corresponding to Figure 6a and Figure 6b, and identification-switch has not occurred in a tracklet corresponding to Figure 6c. It can be seen that, a distribution characteristic of the elements in the global similarity matrix GS can be used to determine a candidate identification switch image patch of a tracklet.

Figure 7 illustrates an exemplary flowchart of a method 700 for determining a candidate identification switch image patch of a tracklet based on a global similarity matrix according to an embodiment of the present disclosure. Exemplary description of a method for determining a candidate identification switch image patch of a tracklet based on the global similarity matrix GS will be made with reference to Figure 7 below. In an example, the operation S503 in Figure 5 can include operations in the method 700.

In operation S701, a Gaussian checkerboard kernel $K_G(k,l)$ is determined based on a common checkerboard kernel Kbox and a two-dimensional Gaussian function Ø(k,l). An example of a 5*5 common checkerboard kernel Kbox is as shown by Equation (1).

$$\text{Kbox}=\begin{bmatrix} -1 & -1 & 0 & 1 & 1 \\ -1 & -1 & 0 & 1 & 1 \\ 0 & 0 & 0 & 0 & 0 \\ 1 & 1 & 0 & -1 & -1 \\ 1 & 1 & 0 & -1 & -1 \end{bmatrix} \qquad (1)$$

$$\emptyset(k,l) = \exp\left(-\varepsilon^2(k^2 + l^2)\right) \qquad (2)$$

The two-dimensional Gaussian function Ø(k,l) is as shown by Equation (2), where, ε is a parameter of the two-dimensional Gaussian function.

An element $k_G(k,l)$ of the two-dimensional Gaussian function Ø(k,l) is as shown by Equation (3).

$$k_G(k,l) = \text{kbox}(k,l) * \emptyset(k,l) \qquad (3)$$

Where, $k, l \in [-L, L]$; L is an integer greater than 1, for example, L=10; and a size of the common checkerboard kernel Kbox is (2L+1)*(2L+1).

It is possible to directly use Equation (3) to calculate a checkerboard kernel transformation value. Optionally, the element $k_G(k,l)$ can be used to calculate a checkerboard kernel transformation value after being updated to a normalized value according to Equation (4).

$$k_G(k,l) = \frac{k_G(k,l)}{\sum_{k,l\in[-L,L]} |k_G(k,l)|} \qquad (4)$$

In operation S703, a checkerboard kernel transformation value Δ(j) of each image patch in the image patch sequence is determined by summing the products of elements of a local similarity matrix LS[j] of each image patch Patch[j] in the image patch sequence and corresponding elements in the Gaussian checkerboard kernel $K_G(k,l)$, wherein the local similarity matrix LS of each image patch in the image patch sequence is determined based on elements in a local area corresponding to the image patch in the global similarity matrix. The checkerboard kernel transformation value Δ(j) can be determined according to Equation (5).

$$\Delta(j) = \sum_{k,l\in[-L,L]} k_G(k,l) * s(j + k, j + l) \qquad (5)$$

where, s(j + k,j + l) is an element in the global similarity matrix GS, and when j is too large or too small so that an element index j+k, j+1 exceeds a range of ([j Start, jEnd]), *s(j + k, j + l)* is set to zero. That is, when the checkerboard kernel transformation value Δ(j) is calculated, the local similarity matrix LS[j] is used, and the matrix LS[j] is a matrix composed of elements being centered on an element s (j, j) and being indexed within a range of [j-L, j+L] in the global similarity matrix GS, with a size of (2L+1)*(2L+1). That is, the elements in the local area corresponding to the image patch comprise a central element corresponding to the image patch on a main diagonal of the global similarity matrix and adjacent elements of the central element.

In operation S705, a candidate identification switch image patch is determined based on a highest peak in a transformation value curve. Specifically, in a case where a transformation value curve representing changes in the checkerboard kernel transformation value of each image patch has at least one peak, it is determined that a candidate identification switch image patch is present, and an image patch corresponding to a highest peak among the at least one peak is determined as the candidate identification switch image patch. Figure 8 illustrates an example transformation value curve representing changes in a checkerboard kernel transformation value of each image patch according to an embodiment of the present disclosure. As illustrated in Figure 8, a highest peak of a checkerboard kernel transformation value curve appears at a place where j=12. Thus, Patch[12] is determined as a candidate identification switch image patch. If the transformation value curve has no peak, then it is regarded that no candidate identification switch image patch is present.

An initial tracklet in the method 100 may include a plurality of splitting points (that is, identification-switch has occurred multiple times). For this case, it is possible to determine all splitting points through recursive processing. In an embodiment, the method 100 can include recursive processing: updating the tracklet to each of two subtracklets respectively, and continuing to making attempts to split a current tracklet. When the number of times of splitting exceeds a predetermined number threshold of times (e.g., four times), making attempts to split the current tracklet is stopped; and the number of times of splitting refers to the number of times of splitting an initial tracklet to obtain the current tracklet. Further, when attempts are made to split the current tracklet, if no splitting occurs (for example, no candidate identification switch image patch is found or a candidate identification switch image patch is not credible) in the end, then skip the recursive processing, and turn back to the main program and output a processing result.

The candidate identification switch image patch determined in the method 100 may not be a real splitting point used to eliminate identification-switch. It is thus possible to consider various conditions to verify whether the candidate identification switch image patch is credible. In an embodiment, it is verified whether it is credible that identification-switch has occurred at the candidate identification switch image patch based on at least one of a first condition C1, a second condition C2, and a third condition C3.

The first condition C1: in an original image corresponding to the candidate identification switch image patch, a largest occlusion rate of a bounding box of the candidate identification switch image patch is greater than a predetermined occlusion rate threshold oTh (e.g., 0.5). The original image refers to that, in a process in which multi-target tracking processes an image sequence captured by a camera to output a tracklet, the image sequence contains an image of the candidate identification switch image patch. An occlusion rate of an image patch in the original image can be represented as: in the original image, a ratio of the area of an overlapping area between a bounding box of an overlapping image patch that overlaps with the image patch and a bounding box of the image patch to the area of the bounding box of the image patch. When a concerned image patch (bounding box) does not overlap with other image patches (other bounding boxes) in the original image, an occlusion rate of the concerned image patch is 0. When a concerned image patch (bounding box)) overlaps with a plurality of other image patches (other bounding boxes) in the original image, then since each pair of overlapping image patches has an overlapping area, there are also a plurality of occlusion rates of the concerned image patch, and a largest occlusion rate is a largest one of the plurality of occlusion rates of the concerned image patch. Note that, when a concerned image patch (bounding box) does not overlap with other image patches (other bounding boxes) in the original image, it is regarded that a largest occlusion rate of the concerned image patch is 0. Occlusion would easily lead to identification-switch, and in case of a larger occlusion rate, incorrect target matching would more easily occur, and an incorrect tracklet that has a flaw would occur; thus, this embodiment considers the first condition. For example, in a case where it is determined that the candidate identification switch image patch satisfies the first condition (that is, occlusion has occurred to the candidate identification switch image patch, and the occlusion is severer), it is determined (verified) that it is credible that identification-switch has occurred at the candidate identification switch image patch.

The condition C2: an angle between a moving direction of a target in the candidate identification switch image patch and a moving direction of a target in a later image patch after the candidate identification switch image patch in the tracklet is greater than a predetermined angle threshold aTh. For example, in the tracklet Trk[i], a moving direction of a target in the candidate identification switch image patch Patch[j] is a first direction dir1, a moving direction of a target in a later image patch Patch[j+1] after the candidate identification switch image patch Patch[j] is a second direction dir2, and if an angle between the first direction dir1 and the second direction dir2 is very large (e.g., larger than 90 degrees, or, larger than 150 degrees), it is very possible that incorrect target matching has occurred. A moving direction of a target can be determined, for example, according to a central location (in image coordinate system) of a bounding box (current bounding box) of the image patch and a central location of a previous bounding box. For example, in a case where it is determined that the candidate identification switch image patch satisfies the second condition (that is, a moving direction of a target in the image patch has been greatly changed), it is determined (verified) that it is credible that identification-switch has occurred at the candidate identification switch image patch.

The third condition C3: a similarity Sim(Patch1k, Patch2k) between a key image patch Patch1k of a front tracklet Trk1 and a key image patch Patch2k of a back tracklet Trk2 is less than a predetermined image patch similarity threshold pTh. The similarity Sim (Patch 1k, Patch2k) can be a cosine similarity between re-identification features F1k and F2k, wherein, F1k is a re-identification feature of the key image patch Patch1k, and F2k is a re-identification feature of the key image patch Patch2k. The front tracklet Trk1 is a subtracklet before the candidate identification switch image patch Patch-sc in the tracklet Trk[i]. For example, if the candidate identification switch image patch is Patch[j], then Trk1 is an image patch sequence composed of Patch[jStart] to Patch[j-1]. The back tracklet Trk2 is a remaining subtracklet other than the front tracklet Trk1 in the tracklet. For example, if the candidate identification switch image patch is Patch[j], then Trk2 is an image patch sequence composed of Patch[j] to Patch[jEnd].

A key image patch of a subtracklet sTrk in the front tracklet Trk1 and the back tracklet Trk2 is determined by: determining an r-value of each image patch in the subtracklet sTrk; and selecting an image patch with a largest r value as a key image patch of the subtracklet sTrk. Where r is associated with d, o and h/H_max. For example, r can be determined according to Equation (6).

$$r = d - o + h/H\_max \qquad (6)$$

Where, d is detection confidence of a bounding box of the image patch; o is an occlusion rate of the bounding box of the image patch; h is a height of the bounding box; and H_max is a maximum bounding box height in the subtracklet. In a variant example, r is the weighted sum of "d", "-o", "h/H_max". For example, in a case where it is determined that the candidate identification switch image patch satisfies the third condition (that is, a re-identification feature of a key image patch has been greatly changed), it is determined (verified) that it is credible that identification-switch has occurred at the candidate identification switch image patch.

With regard to verifying that identification-switch has occurred at the candidate identification switch image patch, it is possible to design a predetermined rule based on the first condition C1, the second condition C2, and the third condition C3 to improve the accuracy of verification. The predetermined rule can be artificially set based on experience, and can also be given through learning using a decision tree. The predetermined rule can consider all the three conditions. It is possible to use samples to perform learning, and a result given by the learning includes, preferably, a predetermined occlusion rate threshold oTh, a predetermined angle threshold aTh, and a predetermined image patch similarity threshold pTh.

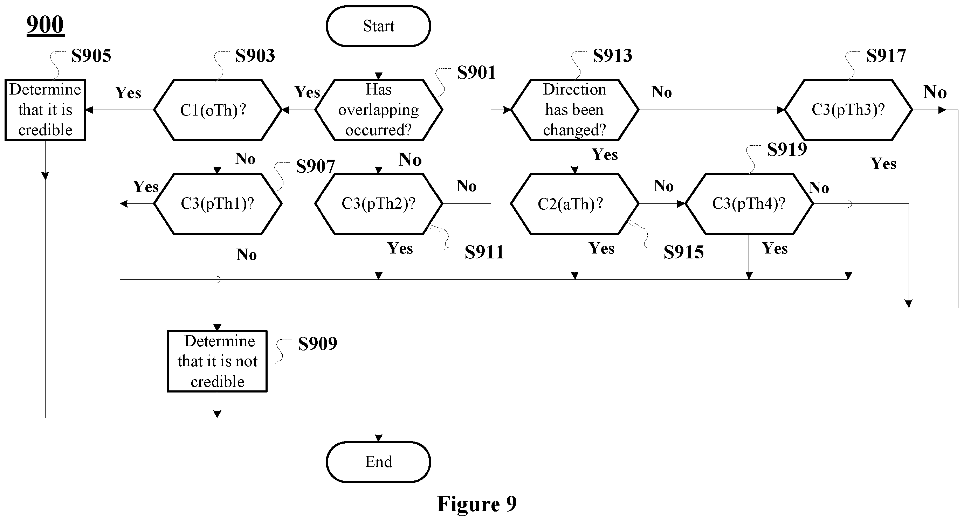

A finer verification method is to set, for the third condition C3, different thresholds in different cases. Preferable values of the different thresholds can be determined through learning using samples. Figure 9 illustrates an exemplary flowchart of a method 900 for verification according to an embodiment of the present disclosure. The method 900 performs verification according to whether a candidate identification switch image patch has overlapping, whether changes in a moving direction have occurred, the first condition, the second condition, and four kinds of third conditions. In operation S901, it is determined whether overlapping has occurred to a candidate identification switch image patch in a corresponding original image, and in a case where a determination result is "yes", operation S903 is performed to determine whether the first condition C1 is satisfied, i.e., to determine whether a largest occlusion rate of a bounding box of the candidate identification switch image patch is greater than a predetermined occlusion rate threshold oTh (represented as "(C1(oTh)?" in the figure); if a determination result of S903 is "yes", then it is determined that it is credible that identification-switch has occurred at the candidate identification switch image patch (operation S905), and if the determination result of S903 is "no", then operation S907 is performed to determine whether a first kind of third condition is satisfied, i.e., to determine whether a similarity between a key image patch of a front tracklet and a key image patch of a back tracklet is less than a first predetermined image patch similarity threshold pTh1 (represented as "(C3(pTh1)?" in the figure); if a determination result of S907 is "yes", then it is determined that the candidate identification switch image patch is credible, and if the determination result of S907 is "no", then it is determined that the candidate identification switch image patch is not credible (operation S909), that is, it is regarded that the candidate identification switch image patch is a pseudo splitting point, and subsequently a tracklet is not split based on the pseudo splitting point. If a determination result of S901 is "no", then operation S911 is performed to determine whether a second kind of third condition is satisfied, i.e., to determine whether a similarity between a key image patch of a front tracklet and a key image patch of a back tracklet is less than a second predetermined image patch similarity threshold pTh2 (represented as "(C3(pTh2)?" in the figure); if a determination result of S911 is "yes", then it is determined that the candidate identification switch image patch is credible, and if the determination result of S911 is "no", then operation S913 is performed. In the operation S913, it is determined whether changes in a moving direction of a target have occurred, i.e., whether an angle between a moving direction of a target in the candidate identification switch image patch and a moving direction of a target in a later image patch after the candidate identification switch image patch in the tracklet is substantially zero (for example, if the angle is between positive and negative 10°, it is regarded that there is no change in the moving direction, otherwise it is regarded that the direction has been changed). If a determination result of S913 is "yes", then operation S915 is performed to determine whether the second condition C2 is satisfied, i.e., to determine whether an angle between a moving direction of a target in the candidate identification switch image patch and a moving direction of a target in a later image patch after the candidate identification switch image patch in the tracklet is greater than a predetermined angle threshold aTh (represented as "(C2(aTh)?" in the figure). If a determination result of the operation S915 is "yes", then it is determined that the candidate identification switch image patch is credible, and if the determination result of the operation S915 is "no", then operation S919 is performed. If a determination result of the operation S913 is "no", then operation S917 is performed to determine whether a third kind of third condition is satisfied, i.e., to determine whether a similarity between a key image patch of a front tracklet and a key image patch of a back tracklet is less than a third predetermined image patch similarity threshold pTh3 (represented as "(C3(pTh3)?" in the figure). If a determination result of operation S917 is "yes", then it is determined that the candidate identification switch image patch is credible, and if the determination result of operation S917 is "no", then it is determined that the candidate identification switch image patch is not credible. In operation S919, it is determined whether a fourth kind of third condition is satisfied, i.e., to determine whether a similarity between a key image patch of a front tracklet and a key image patch of a back tracklet is less than a fourth predetermined image patch similarity threshold pTh4 (represented as "(C3(pTh4)?" in the figure). If a determination result of operation S919 is "yes", then it is determined that the candidate identification switch image patch is credible, and if the determination result of operation S919 is "no", then it is determined that the candidate identification switch image patch is not credible. The method 900 is only an example of a verification method of the present disclosure. It could be understood that, it is possible to employ verification methods with other different processes.

For a sample tracklet, its identification-switch rate is 4.46%, and through the post-processing process described in the method 100, the identification-switch rate is decreased to 0.141%. This shows that the method 100 of the present disclosure can significantly reduce identification-switch in multi-target tracking.

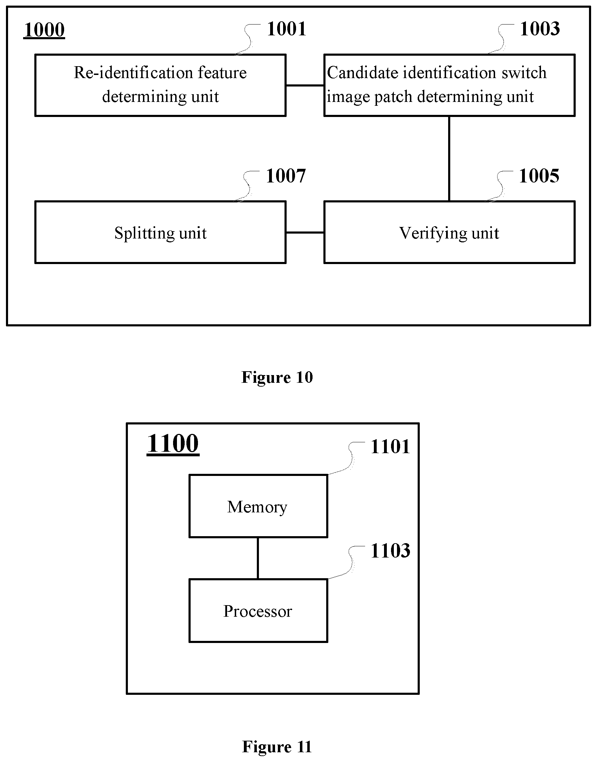

In an embodiment of the present disclosure, there is provided a device for post-processing in multi-target tracking. Exemplary description will be made with reference to Figure 10 below. Figure 10 illustrates an exemplary block diagram of a device 1000 for post-processing in multiple-target tracking according to an embodiment of the present disclosure. The device 1000 comprises: a re-identification feature determining unit 1001, a candidate identification switch image patch determining unit 1003, a verifying unit 1005, and a splitting unit 1007. The device 1000 can make attempts to split a tracklet indicative of a trajectory of a single target with the units 1001 to 1007. The re-identification feature determining unit 1001 is configured to: determine a re-identification feature set of an image patch sequence by determining a re-identification feature of each image patch in the image patch sequence of the tracklet. The candidate identification switch image patch determining unit 1003 is configured to: determine whether a candidate identification switch image patch is present in the tracklet based on feature similarities of a plurality of re-identification feature pairs in the re-identification feature set. The verifying unit 1005 is configured to: in a case where a determination result is "yes", verify whether it is credible that identification-switch has occurred at the candidate identification switch image patch. The splitting unit 1007 is configured to: in a case where a verification result is "credible", split the tracklet into two tracklets based on the candidate identification switch image patch. The device 1000 has a corresponding relationship with the method 100. For the further configuration of the device 1000, reference may be made to the description of the method 100 of the present disclosure.

In an embodiment of the present disclosure, there is provided another device for post-processing in multi-target tracking. Exemplary description will be made with reference to Figure 11 below. Figure 11 illustrates an exemplary block diagram of a device 1100 for post-processing in multi-target tracking according to an embodiment of the present disclosure. The device 1100 comprises: a memory 1101 having instructions stored thereon; and at least one processor 1103 connected to the memory 1101 and used to execute the instructions on the memory 1101 to split a tracklet indicative of a trajectory of a single target by performing operations of: determining a re-identification feature set of an image patch sequence by determining a re-identification feature of each image patch in the image patch sequence of the tracklet; determining whether a candidate identification switch image patch is present in the tracklet based on feature similarities of a plurality of re-identification feature pairs in the re-identification feature set; in a case where a determination result is "yes", verifying whether it is credible that identification-switch has occurred at the candidate identification switch image patch; and in a case where a verification result is "credible", splitting the tracklet into two tracklets based on the candidate identification switch image patch. The instruction has a corresponding relationship with the method 100. For the further configuration situation of the device 1100, reference may be made to the description of the method 100 of the present disclosure.

An aspect of the present disclosure provides a non-transitory computer-readable storage medium having a program stored thereon. The program, when executed, causes a computer to make attempts to split a tracklet indicative of a trajectory of a single target by performing operations of: determining a re-identification feature set of an image patch sequence by determining a re-identification feature of each image patch in the image patch sequence of the tracklet; determining whether a candidate identification switch image patch is present in the tracklet based on feature similarities of a plurality of re-identification feature pairs in the re-identification feature set; in a case where a determination result is "yes", verifying whether it is credible that identification-switch has occurred at the candidate identification switch image patch; and in a case where a verification result is "credible", splitting the tracklet into two tracklets based on the candidate identification switch image patch. The program has a corresponding relationship with the method 100. For the further configuration situation of the program, reference may be made to the description of the method 100 of the present disclosure.

According to an aspect of the present disclosure, there is further provided an information processing apparatus.

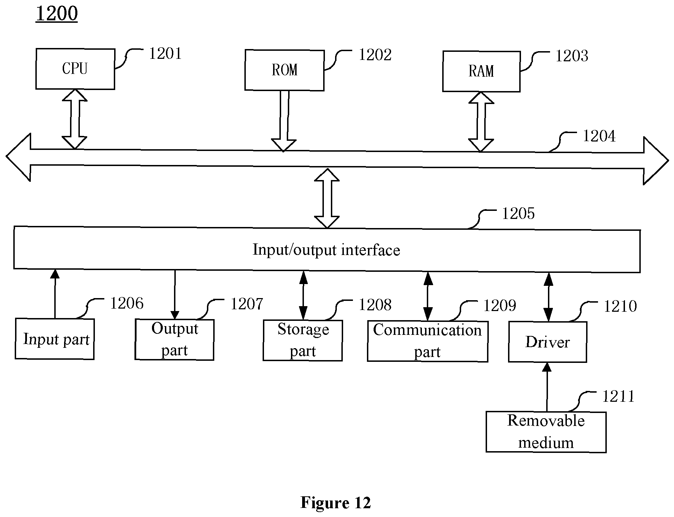

Figure 12 illustrates an exemplary block diagram of an information processing apparatus 1200 according to an embodiment of the present disclosure. In Figure 12, a Central Processing Unit (CPU) 1201 executes various processing according to programs stored in a Read-Only Memory (ROM) 1202 or programs loaded from a storage part 1209 to a Random Access Memory (RAM) 1203. In the RAM 1203, data needed when the CPU 1201 executes various processing and the like is also stored as needed.

The CPU 1201, the ROM 1202 and the RAM 1203 are connected to each other via a bus 1204. An input/output interface 1205 is also connected to the bus 1204.

The following components are connected to the input/output interface 1205: an input part 1206, including a soft keyboard and the like; an output part 1207, including a display such as a Liquid Crystal Display (LCD) and the like, as well as a speaker and the like; the storage part 1208 such as a hard disc and the like; and a communication part 1209, including a network interface card such as an LAN card, a modem and the like. The communication part 1209 executes communication processing via a network such as the Internet, a local area network, a mobile network or a combination thereof.

A driver 1210 is also connected to the input/output interface 1205 as needed. A removable medium 1211 such as a semiconductor memory and the like is installed on the driver 1210 as needed, such that programs read therefrom are installed in the storage device 1208 as needed.

The CPU 1201 can run a program corresponding to a method for post-processing in multi-target tracking.

In the embodiments of the present disclosure, the post-processing as involved can reduce identification-switch, so as to avoid adverse effects caused by occlusion, illumination and attitude changes on multi-target tracking.

The beneficial effects of the methods, devices, and storage media of the present disclosure include at least one of: reducing identification-switch, and improving the accuracy of multi-target tracking.

As described above, according to the present disclosure, the principle of post-processing in multi-target tracking which reduces identification-switch has been disclosed. It should be noted that, the effects of the solution of the present disclosure are not necessarily limited to the above-mentioned effects, and in addition to or instead of the effects described in the preceding paragraphs, any of the effects as shown in the specification or other effects that can be understood from the specification can be obtained.

Although the present invention has been disclosed above through the description with regard to specific embodiments of the present invention, it should be understood that those skilled in the art can design various modifications (including, where feasible, combinations or substitutions of features between various embodiments), improvements, or equivalents to the present invention within the scope of the appended claims. These modifications, improvements or equivalents should also be considered to be included within the protection scope of the present invention.

It should be emphasized that, the term "comprise/include" as used herein refers to the presence of features, elements, operations or assemblies, but does not exclude the presence or addition of one or more other features, elements, operations or assemblies.

In addition, the methods of the various embodiments of the present invention are not limited to be executed in the time order as described in the specification or as shown in the accompanying drawings, and may also be executed in other time orders, in parallel or independently. Therefore, the execution order of the methods as described in the specification fails to constitute a limitation to the technical scope of the present invention.

Appendix

The present disclosure includes but is not limited to the following solutions.

1. A computer-implemented method for post-processing in multi-target tracking, characterized by comprising making attempts to split a tracklet indicative of a trajectory of a single target by performing operations of:

determining a re-identification feature set of an image patch sequence by determining a re-identification feature of each image patch in the image patch sequence of the tracklet;

determining whether a candidate identification switch image patch is present in the tracklet based on feature similarities of a plurality of re-identification feature pairs in the re-identification feature set;

in a case where a determination result is "yes", verifying whether it is credible that identification-switch has occurred at the candidate identification switch image patch; and

in a case where a verification result is "credible", splitting the tracklet into two tracklets based on the candidate identification switch image patch.

2. The method according to Appendix 1, wherein determining whether a candidate identification switch image patch is present in the tracklet based on feature similarities of a plurality of re-identification feature pairs in the re-identification feature set comprises:

determining feature similarities of re-identification feature pairs of a plurality of adjoining image patch pairs in the image patch sequence; and

determining whether a candidate identification switch image patch is present in the tracklet according to whether a special feature similarity less than a predetermined similarity threshold is present in the feature similarities.

3. The method according to Appendix 2, wherein in a case where it is determined that a special feature similarity less than a predetermined similarity threshold is present in the feature similarities, it is determined that a candidate identification switch image patch is present in the tracklet; and
an image patch associated with the special feature similarity is designated as the candidate identification switch image patch.

4. The method according to Appendix 1, wherein determining whether a candidate identification switch image patch is present in the tracklet based on feature similarities of a plurality of re-identification feature pairs in the re-identification feature set comprises:

generating a global similarity matrix representing similarities between respective image patches in the image patch sequence based on feature similarities of the plurality of re-identification feature pairs in the re-identification feature set; and

determining whether the candidate identification switch image patch is present in the tracklet based on the global similarity matrix.

5. The method according to Appendix 4, wherein determining whether the candidate identification switch image patch is present in the tracklet based on the global similarity matrix comprises:

determining a Gaussian checkerboard kernel based on a common checkerboard kernel and a two-dimensional Gaussian function;

determining a checkerboard kernel transformation value of each image patch in the image patch sequence by summing the products of elements of a local similarity matrix of each image patch in the image patch sequence and corresponding elements in the Gaussian checkerboard kernel; and

in a case where a transformation value curve representing changes in the checkerboard kernel transformation value of each image patch has at least one peak, determining an image patch corresponding to a highest peak among the at least one peak as the candidate identification switch image patch;

wherein the local similarity matrix of each image patch in the image patch sequence is determined based on elements in a local area corresponding to the image patch in the global similarity matrix.

6. The method according to Appendix 5, wherein the elements in the local area corresponding to the image patch comprise a central element corresponding to the image patch on a main diagonal of the global similarity matrix and adjacent elements of the central element.

7. The method according to Appendix 1, wherein the operations further comprise: updating the tracklet to each of the two tracklets respectively, and continuing to making attempts to split a current tracklet.

8. The method according to Appendix 7, wherein when the number of times of splitting exceeds a predetermined number threshold of times, making attempts to split the current tracklet is stopped; and
the number of times of splitting refers to the number of times of splitting an initial tracklet to obtain the current tracklet.

9. The method according to Appendix 8, wherein the predetermined number threshold of times is 4.

10. The method according to Appendix 1, wherein it is verified whether it is credible that identification-switch has occurred at the candidate identification switch image patch based on at least one of the following conditions:

a first condition: in an original image corresponding to the candidate identification switch image patch, a largest occlusion rate of a bounding box of the candidate identification switch image patch is greater than a predetermined occlusion rate threshold;

a second condition: an angle between a moving direction of a target in the candidate identification switch image patch and a moving direction of a target in a later image patch after the candidate identification switch image patch in the tracklet is greater than a predetermined angle threshold; and

a third condition: a similarity between a key image patch of a front tracklet and a key image patch of a back tracklet is less than a predetermined image patch similarity threshold;

wherein the front tracklet is a subtracklet before the candidate identification switch image patch in the tracklet;

the back tracklet is a remaining subtracklet other than the front tracklet in the tracklet;

a key image patch of each subtracklet in the front tracklet and the back tracklet is determined by:

determining an r-value of each image patch in the subtracklet; and

selecting an image patch with a largest r value as a key image patch of the subtracklet;

where r is associated with d, o and h/H_max;

d is detection confidence of a bounding box of the image patch;

o is an occlusion rate of the bounding box of the image patch;

h is a height of the bounding box; and

H_max is a maximum bounding box height in the subtracklet.

11. A device for post-processing in multi-target tracking, characterized by comprising:

a memory having instructions stored thereon; and

at least one processor connected with the memory and configured to execute the instructions to making attempts to split a tracklet indicative of a trajectory of a single target by performing operations of:

determining a re-identification feature set of an image patch sequence by determining a re-identification feature of each image patch in the image patch sequence of the tracklet;

determining whether a candidate identification switch image patch is present in the tracklet based on feature similarities of a plurality of re-identification feature pairs in the re-identification feature set;

in a case where a determination result is "yes", verifying whether it is credible that identification-switch has occurred at the candidate identification switch image patch; and

in a case where a verification result is "credible", splitting the tracklet into two tracklets based on the candidate identification switch image patch.

12. The device according to Appendix 11, wherein determining whether a candidate identification switch image patch is present in the tracklet based on feature similarities of a plurality of re-identification feature pairs in the re-identification feature set comprises:

determining feature similarities of re-identification feature pairs of a plurality of adjoining image patch pairs in the image patch sequence; and

determining whether a candidate identification switch image patch is present in the tracklet according to whether a special feature similarity less than a predetermined similarity threshold is present in the feature similarities.

13. The device according to Appendix 12, wherein in a case where it is determined that a special feature similarity less than a predetermined similarity threshold is present in the feature similarities, it is determined that a candidate identification switch image patch is present in the tracklet; and
an image patch associated with the special feature similarity is designated as the candidate identification switch image patch.

14. The device according to Appendix 11, wherein determining whether a candidate identification switch image patch is present in the tracklet based on feature similarities of a plurality of re-identification feature pairs in the re-identification feature set comprises:

generating a global similarity matrix representing similarities between respective image patches in the image patch sequence based on feature similarities of the plurality of re-identification feature pairs in the re-identification feature set; and
determining whether the candidate identification switch image patch is present in the tracklet based on the global similarity matrix.

15. The device according to Appendix 14, wherein determining whether the candidate identification switch image patch is present in the tracklet based on the global similarity matrix comprises:

determining a Gaussian checkerboard kernel based on a common checkerboard kernel and a two-dimensional Gaussian function;

determining a checkerboard kernel transformation value of each image patch in the image patch sequence by summing the products of elements of a local similarity matrix of each image patch in the image patch sequence and corresponding elements in the Gaussian checkerboard kernel; and

in a case where a transformation value curve representing changes in the checkerboard kernel transformation value of each image patch has at least one peak, determining an image patch corresponding to a highest peak among the at least one peak as the candidate identification switch image patch;

wherein the local similarity matrix of each image patch in the image patch sequence is determined based on elements in a local area corresponding to the image patch in the global similarity matrix.

16. The device according to Appendix 15, wherein the elements in the local area corresponding to the image patch comprise a central element corresponding to the image patch on a main diagonal of the global similarity matrix and adjacent elements of the central element.

17. The device according to Appendix 11, wherein the operations further comprise: updating the tracklet to each of the two tracklets respectively, and continuing to making attempts to split a current tracklet.

18. The device according to Appendix 17, wherein when the number of times of splitting exceeds a predetermined number threshold of times, making attempts to split the current tracklet is stopped; and
the number of times of splitting refers to the number of times of splitting an initial tracklet to obtain the current tracklet.

19. The device according to Appendix 11, wherein it is verified whether it is credible that identification-switch has occurred at the candidate identification switch image patch based on at least one of the following conditions:

a first condition: in an original image corresponding to the candidate identification switch image patch, a largest occlusion rate of a bounding box of the candidate identification switch image patch is greater than a predetermined occlusion rate threshold;

a second condition: an angle between a moving direction of a target in the candidate identification switch image patch and a moving direction of a target in a later image patch after the candidate identification switch image patch in the tracklet is greater than a predetermined angle threshold; and

a third condition: a similarity between a key image patch of a front tracklet and a key image patch of a back tracklet is less than a predetermined image patch similarity threshold;

wherein the front tracklet is a subtracklet before the candidate identification switch image patch in the tracklet;

the back tracklet is a remaining subtracklet other than the front tracklet in the tracklet;

a key image patch of each subtracklet in the front tracklet and the back tracklet is determined by:

determining an r-value of each image patch in the subtracklet; and

selecting an image patch with a largest r value as a key image patch of the subtracklet;

where r is associated with d, o and h/H_max;

d is detection confidence of a bounding box of the image patch;

o is an occlusion rate of the bounding box of the image patch;

h is a height of the bounding box; and

H_max is a maximum bounding box height in the subtracklet.

20. A non-transitory computer-readable storage medium having a program stored thereon, wherein the program, when executed, causes a computer to making attempts to split a tracklet indicative of a trajectory of a single target by performing operations of:

determining a re-identification feature set of an image patch sequence by determining a re-identification feature of each image patch in the image patch sequence of the tracklet;

determining whether a candidate identification switch image patch is present in the tracklet based on feature similarities of a plurality of re-identification feature pairs in the re-identification feature set;

in a case where a determination result is "yes", verifying whether it is credible that identification-switch has occurred at the candidate identification switch image patch; and

in a case where a verification result is "credible", splitting the tracklet into two tracklets based on the candidate identification switch image patch.

**Claims**

1. A computer-implemented method (100) for post-processing in multi-target tracking, **characterized by** comprising making attempts to split a tracklet indicative of a trajectory of a single target by performing operations of:

determining (S101) a re-identification feature set of an image patch sequence by determining a re-identification feature of each image patch in the image patch sequence of the tracklet;
determining (S103) whether a candidate identification switch image patch is present in the tracklet based on feature similarities of a plurality of re-identification feature pairs in the re-identification feature set;

in a case where a determination result is "yes", verifying (S105) whether it is credible that identification-switch has occurred at the candidate identification switch image patch; and

in a case where a verification result is "credible", splitting (S107) the tracklet into two tracklets based on the candidate identification switch image patch.

2. The method according to claim 1, wherein determining whether a candidate identification switch image patch is present in the tracklet based on feature similarities of a plurality of re-identification feature pairs in the re-identification feature set comprises:

   determining (S301) feature similarities of re-identification feature pairs of a plurality of adjoining image patch pairs in the image patch sequence; and

   determining (S303) whether a candidate identification switch image patch is present in the tracklet according to whether a special feature similarity less than a predetermined similarity threshold is present in the feature similarities.

3. The method according to claim 2, wherein in a case where it is determined that a special feature similarity less than a predetermined similarity threshold is present in the feature similarities, it is determined that a candidate identification switch image patch is present in the tracklet; and

   an image patch associated with the special feature similarity is designated as the candidate identification switch image patch (S435).

4. The method according to claim 1, wherein determining whether a candidate identification switch image patch is present in the tracklet based on feature similarities of a plurality of re-identification feature pairs in the re-identification feature set comprises:

   generating (S501) a global similarity matrix representing similarities between respective image patches in the image patch sequence based on feature similarities of the plurality of re-identification feature pairs in the re-identification feature set; and

   determining (S503) whether the candidate identification switch image patch is present in the tracklet based on the global similarity matrix.

5. The method according to claim 4, wherein determining whether the candidate identification switch image patch is present in the tracklet based on the global similarity matrix comprises:

   determining (S701) a Gaussian checkerboard kernel based on a common checkerboard kernel and a two-dimensional Gaussian function;

   determining (S703) a checkerboard kernel transformation value of each image patch in the image patch sequence by summing the products of elements of a local similarity matrix of each image patch in the image patch sequence and corresponding elements in the Gaussian checkerboard kernel; and

   in a case where a transformation value curve representing changes in the checkerboard kernel transformation value of each image patch has at least one peak, determining (S705) an image patch corresponding to a highest peak among the at least one peak as the candidate identification switch image patch;

   wherein the local similarity matrix of each image patch in the image patch sequence is determined based on elements in a local area corresponding to the image patch in the global similarity matrix.

6. The method according to claim 5, wherein the elements in the local area corresponding to the image patch comprise a central element corresponding to the image patch on a main diagonal of the global similarity matrix and adjacent elements of the central element.

7. The method according to claim 1, wherein the operations further comprise: updating the tracklet to each of the two tracklets respectively, and continuing to making attempts to split a current tracklet.

8. The method according to claim 7, wherein when the number of times of splitting exceeds a predetermined number threshold of times, making attempts to split the current tracklet is stopped; and

   the number of times of splitting refers to the number of times of splitting an initial tracklet to obtain the current tracklet.

9. The method according to claim 8, wherein the predetermined number threshold of times is 4.

10. The method according to claim 1, wherein it is verified whether it is credible that identification-switch has occurred at the candidate identification switch image patch based on at least one of the following conditions:

> a first condition: in an original image corresponding to the candidate identification switch image patch, a largest occlusion rate of a bounding box of the candidate identification switch image patch is greater than a predetermined occlusion rate threshold;
> a second condition: an angle between a moving direction of a target in the candidate identification switch image patch and a moving direction of a target in a later image patch after the candidate identification switch image patch in the tracklet is greater than a predetermined angle threshold; and
> a third condition: a similarity between a key image patch of a front tracklet and a key image patch of a back tracklet is less than a predetermined image patch similarity threshold;
> wherein the front tracklet is a subtracklet before the candidate identification switch image patch in the tracklet;
> the back tracklet is a remaining subtracklet other than the front tracklet in the tracklet;
> a key image patch of each subtracklet in the front tracklet and the back tracklet is determined by:

>> determining an r-value of each image patch in the subtracklet; and
>> selecting an image patch with a largest r value as a key image patch of the subtracklet;

> where r is associated with d, o and h/H_max;
> d is detection confidence of a bounding box of the image patch;
> o is an occlusion rate of the bounding box of the image patch;
> h is a height of the bounding box; and
> H_max is a maximum bounding box height in the subtracklet.

11. A device (1100) for post-processing in multi-target tracking, **characterized by** comprising:

> a memory (1101) having instructions stored thereon; and
> at least one processor (1103) connected with the memory and configured to execute the instructions to making attempts to split a tracklet indicative of a trajectory of a single target by performing operations of:

>> determining (S101) a re-identification feature set of an image patch sequence by determining a re-identification feature of each image patch in the image patch sequence of the tracklet;
>> determining (S103) whether a candidate identification switch image patch is present in the tracklet based on feature similarities of a plurality of re-identification feature pairs in the re-identification feature set;
>> in a case where a determination result is "yes", verifying (S105) whether it is credible that identification-switch has occurred at the candidate identification switch image patch; and
>> in a case where a verification result is "credible", splitting (S107) the tracklet into two tracklets based on the candidate identification switch image patch.

12. The device according to claim 11, wherein determining whether a candidate identification switch image patch is present in the tracklet based on feature similarities of a plurality of re-identification feature pairs in the re-identification feature set comprises:

> determining (S301) feature similarities of re-identification feature pairs of a plurality of adjoining image patch pairs in the image patch sequence; and
> determining (S303) whether a candidate identification switch image patch is present in the tracklet according to whether a special feature similarity less than a predetermined similarity threshold is present in the feature similarities.

13. The device according to claim 12, wherein in a case where it is determined that a special feature similarity less than a predetermined similarity threshold is present in the feature similarities, it is determined that a candidate identification switch image patch is present in the tracklet; and
an image patch associated with the special feature similarity is designated as the candidate identification switch image patch (S435).

14. The device according to claim 11, wherein determining whether a candidate identification switch image patch is present in the tracklet based on feature similarities of a plurality of re-identification feature pairs in the re-identification feature set comprises:

generating (S501) a global similarity matrix representing similarities between respective image patches in the image patch sequence based on feature similarities of the plurality of re-identification feature pairs in the re-identification feature set; and

determining (S503) whether the candidate identification switch image patch is present in the tracklet based on the global similarity matrix.

15. A non-transitory computer-readable storage medium having a program stored thereon, wherein the program, when executed, causes a computer to making attempts to split a tracklet indicative of a trajectory of a single target by performing operations of:

determining (S101) a re-identification feature set of an image patch sequence by determining a re-identification feature of each image patch in the image patch sequence of the tracklet;

determining (S103) whether a candidate identification switch image patch is present in the tracklet based on feature similarities of a plurality of re-identification feature pairs in the re-identification feature set;

in a case where a determination result is "yes", verifying (S105) whether it is credible that identification-switch has occurred at the candidate identification switch image patch; and

in a case where a verification result is "credible", splitting (S107) the tracklet into two tracklets based on the candidate identification switch image patch.

**100**

Start

Determine re-identification feature set — S101

Whether a candidate identification switch image patch is present? — S103

Yes

Credible? — S105

No

Yes

Split tracklet into two subtracklets — S107

Other processing or End

**Figure 1**

Figure 2

**300**

Start

Determine feature similarities of adjoining image patch pairs — S301

Determine whether candidate identification switch image patch is present according to whether special feature similarity is present — S303

End

Figure 3

**400**

**Figure 4**

**500**

**Figure 5**

Figure 6

**700**

| | |
|---|---|
| Determining Gaussian checkerboard kernel | S701 |

↓

| | |
|---|---|
| Determine checkerboard kernel transformation value of each image patch | S703 |

↓

| | |
|---|---|
| Determine candidate identification switch image patch based on highest peak in transformation value curve | S705 |

Figure 7

Figure 8

**900**

Figure 9

EP 4 312 195 A1

**1000** ⌐ **1001** ⌐ **1003**

| Re-identification feature determining unit | Candidate identification switch image patch determining unit |

⌐ **1007** ⌐ **1005**

| Splitting unit | Verifying unit |

**Figure 10**

**1100** ⌐ **1101**

| Memory |

⌐ **1103**

| Processor |

**Figure 11**

1200

Figure 12

Europäisches
Patentamt

European
Patent Office

Office européen
des brevets

# EUROPEAN SEARCH REPORT

Application Number

**EP 23 17 9192**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MA CONG ET AL: "Trajectory Factory: Tracklet Cleaving and Re-Connection by Deep Siamese Bi-GRU for Multiple Object Tracking", 2018 IEEE INTERNATIONAL CONFERENCE ON MULTIMEDIA AND EXPO (ICME), IEEE, 23 July 2018 (2018-07-23), pages 1-6, XP033417533, DOI: 10.1109/ICME.2018.8486454 [retrieved on 2018-10-08] * page 1, column 1, line 1 - page 5, column 2, last line; figures 1-4; tables 1-2 * | 1-15 | INV.<br>G06V10/62 |
| | | | TECHNICAL FIELDS SEARCHED (IPC) |
| | | | G06V |

The present search report has been drawn up for all claims

| Place of search | Date of completion of the search | Examiner |
|---|---|---|
| The Hague | 13 October 2023 | Thibault, Guillaume |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210887240